# EUROPÄISCHE PATENTSCHRIFT

(11) **EP 2 124 309 B1**
(45) Veröffentlichungstag und Bekanntmachung des Hinweises auf die Patenterteilung: **01.04.2015**
(21) Anmeldenummer: 08009273.7
(22) Anmeldetag: 20.05.2008
(51) Int. Cl.: H02H 3/00

(54) **Schaltgerät mit erweiterbarer Technologiefunktion und dazugehöriges Verfahren**
Switching device with extendible technology function and related process
Commutateur doté d'une fonction de technologie modulaire et procédé correspondant

(43) Veröffentlichungstag der Anmeldung: 25.11.2009
(73) Patentinhaber: Siemens Aktiengesellschaft, 80333 München (DE)
(72) Erfinder: Weiss, Herbert, 92266 Ensdorf (DE)

(56) Entgegenhaltungen:
- US-A1- 2001 000 355
- US-A1- 2003 048 589
- US-A1- 2003 193 767
- US-A1- 2007 188 954

## Beschreibung

Die Erfindung betrifft ein Schaltgerät, das einen Speicher zur Abspeicherung einer Technologiefunktion als Programm und einen Mikroprozessor zum Ablauf dieses Programms aufweist dadurch gekennzeichnet, dass Mittel vorgesehen sind, mit denen das Schaltgerät mit einem die Technologiefunktion beinhaltenden Softwareobjekt ladbar ist und dass zumindest eine Schnittstelle zur Unterstützung des Softwareobjekts vorgesehen ist, um den Ablauf des Softwareobjekts mit dem Mikroprozessor zu gewährleisten.

Außerdem betrifft die Erfindung ein Verfahren zur Erweiterung eines Schaltgeräts mit einer Technologiefunktion, wobei die Technologiefunktion als Softwareobjekt in das Schaltgerät geladen wird und auf einem Mikroprozessor im Schaltgerät abläuft.

Ein derartiges Schaltgerät ist aus der US2003/0048589 A1 bekannt. Hier ist in einem nicht flüchtigen Speicher des Schaltgeräts eine feste Anzahl von Programmen hinterlegt, die entsprechende Gerätefunktionen steuern. Die Programme werden auf einem Mikroprozessor zum Ablauf gebracht. Nach Stecken eines Moduls wird dieses identifiziert und das dazugehörige Programm zum Ablauf gebracht. Wird allerdings vom Gerätehersteller eine neue Technologiefunktion entwickelt, ist eine neue Ausführung des Schaltgerätes mit neuer Geräte-Firmware erforderlich. Dies hat beim Kunden zusätzliche Hardwarekosten, Engineering-Aufwand, Stillstandszeiten, Umrüstzeiten etc. zur Folge.

Aus US 2007/0188954 A1 ist ein Schaltgerät für den Hausgebrauch bekannt, das mit einem Programmiergerät über das vorhandene elektrische Netz im Haus kommunizieren kann. Dabei ist es möglich, über das wahlweise kontaktierbaren Programmiergerät, neue Funktionen auf das Schaltgerät zu spielen, z. B. Leistungsmessung und -überwachung.

Daher liegt der Erfindung die Aufgabe zu Grunde, ein Schaltgerät der oben genannten Art vorzuschlagen, das durch neue Technologiefunktionen auf einfache Weise erweiterbar ist.

Der Erfindung liegt die weitere Aufgabe zu Grunde, ein Verfahren der oben genannten Art zur Erweiterung des Schaltgeräts mit einer neuen Technologiefunktion vorzuschlagen.

Diese erste Aufgabe wird bei einem Schaltgerät der eingangs genannten Art dadurch gelöst, dass das Schaltgerät zum Anschluss eines Erweiterungsmoduls und zur Kommunikation mit diesem vorbereitet ist und in dem Erweiterungsmodul das die weitere Technologiefunktion beinhaltende Softwareobjekt gespeichert ist.

Dies hat den besonderen Vorteil, dass Kunden bei Bedarf einer neuen Technologiefunktion das bereits vorhandene Schaltgerät nutzen können.

Die weitere Aufgabe wird dadurch gelöst, dass das Softwareobjekt in einem Erweiterungsmodul für das Schaltgerät bereitgestellt wird, das über als zweite Kommunikationsschnittstelle ausgeführte Mittel an das Schaltgerät angeschlossen wird.

Vorteilhafte Weiterbildungen der Erfindung sind den Unteransprüchen 2 und 3 sowie 4 bis 7 zu entnehmen.

Besonders vorteilhaft ist es gemäß Anspruch 2, wenn als Mittel eine erste und/oder zweite Kommunikationsschnittstelle zum Laden des Softwareobjekts vorgesehen ist.

Außerdem ist von Vorteil, wenn gemäß Anspruch 3 das Schaltgerät zur Kommunikation mit einem Rückwandbus als zweite Kommunikationsschnittstelle versehen ist.

Eine besonders vorteilhafte Weiterbildung des erfindungsgemäßen Verfahrens besteht, wenn gemäß Anspruch 5 die Technologiefunktion als Softwareobjekt in das Schaltgerät geladen wird und auf einem Mikroprozessor im Schaltgerät abläuft.

Es ist außerdem besonders vorteilhaft, wenn gemäß Anspruch 6 die Technologiefunktion mittels einer Engineering-Software aktiviert und projektiert wird.

Besonders vorteilhaft ist es außerdem, wenn gemäß Anspruch 7 das Schaltgerät das Erweiterungsmodul identifiziert und das darin gespeicherte Softwareobjekt in einen Speicher des Schaltgeräts lädt.

Ein Ausführungsbeispiel der Erfindung wird im Folgenden anhand einer Zeichnung näher erläutert. Es zeigen:
- FIG 1: ein Schaltgerät ohne Erweiterungsmodul und
- FIG 2: ein erfindungsgemäßes Schaltgerät mit Erweiterungsmodul.

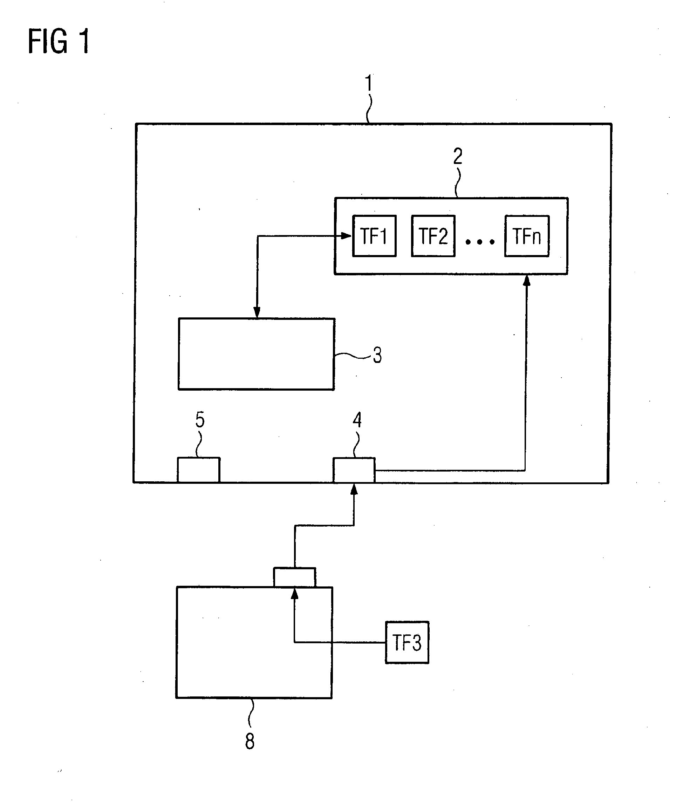

In FIG 1 ist ein Schaltgerät 1 dargestellt, das einen Speicher 2 zur Abspeicherung mindestens einer Technologiefunktion TF1, TF2...TFn als Programm und einen Mikroprozessor 3 zum Ablauf dieses Programms aufweist. In dem Schaltgerät 1 sind Mittel 4,6 vorgesehen, mit denen das Schaltgerät 1 mit einem eine neue Technologiefunktion TF3 beinhaltenden Softwareobjekt ladbar ist. Zumindest eine Schnittstelle 5 dient zur Unterstützung des Softwareobjekts, um dessen Ablauf mit dem Mikroprozessor 3 zu gewährleisten. Die Mittel können zum Beispiel als erste Kommunikationsschnittstelle 4, z.B. als serielle Schnittstelle oder als Feldbus ausgeführt sein. Mit einer Engineering-Software zum Beispiel auf einem Personal Computer(PC) oder Personal Digital Assistant(PDA) 8 wird über die zur Kommunikation dienenden Mittel 4 die neue Technologiefunktionen TF3 als Softwareobjekt in den Speicher 2 des Schaltgeräts 1 geladen.

Die Schnittstelle 5 unterstützt die die Softwareobjekte beinhaltenden Technologiefunktionen TF1, TF2, TF3...TFn, damit diese im Mikroprozessor 3 zum Ablauf gebracht werden können.

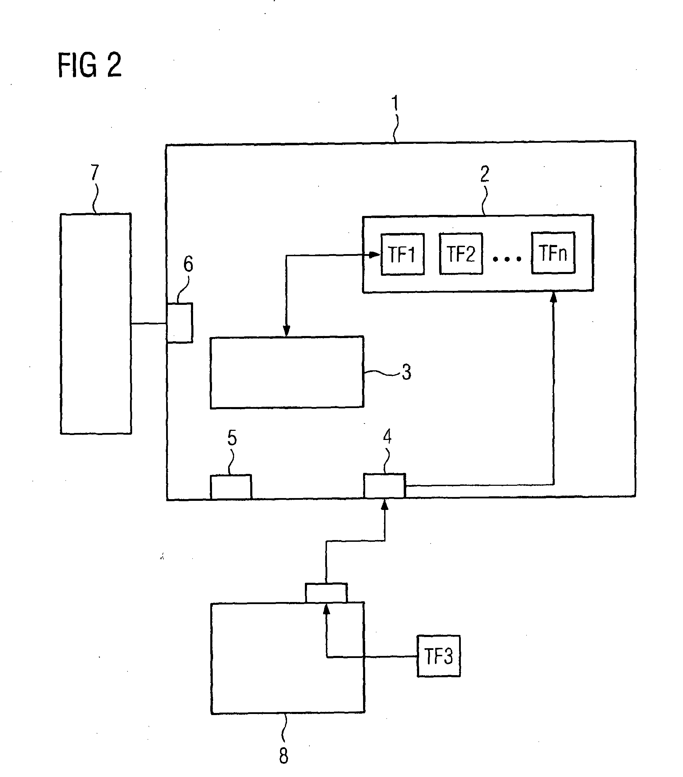

FIG 2 zeigt ein Ausführungsbeispiel mit einem Schaltgerät 1, das eine zweite Kommunikationsschnittstelle 6 als Mittel, zum Beispiel einen Rückwandbus, zum Anschluss eines Erweiterungsmoduls 7 aufweist. In dem Erweiterungsmodul 7 ist die neue Technologiefunktion TF3, zum Beispiel "Erdschlusserkennung" als Softwareobjekt bereitgestellt. Die Technologiefunktion TF3 wird über die Engineering-Software auf dem Personal Computer oder Personal Digital Assistant 8 und über die zweite Kommunikationsschnittstelle geladen und über eine Engineering-Software im Schaltgerät 1 aktiviert und projektiert.

Alternativ hierzu besteht aber auch die Möglichkeit, dass nach Anschluss des Erweiterungsmoduls 7 über die zweite Kommunikationsschnittstelle 6 an das Schaltgerät 1 dieses das Erweiterungsmodul 7 identifiziert und die Technologiefunktion TF3 über die zweite Kommunikationsschnittstelle 6 in den Speicher 2 des Schaltgeräts 1 lädt. Die Technologiefunktion TF3 ist über eine Engineering-Software im Schaltgerät 1 aktivier- und projektierbar und kann dann vom Kunden verwendet werden.

## Patentansprüche

1. Schaltgerät (1), das einen Speicher (2) zur Abspeicherung einer Technologiefunktion (TF1,TF2...TFn) als Programm und einen Mikroprozessor (3) zum Ablauf dieses Programms aufweist, wobei Mittel (4,6) vorgesehen sind, mit denen das Schaltgerät (1) mit einem die Technologiefunktion (TF1,TF2...TFn) beinhaltenden Softwareobjekt ladbar ist und dass zumindest eine Schnittstelle (5) zur Unterstützung des Softwareobjekts vorgesehen ist, um den Ablauf des Softwareobjekts mit dem Mikroprozessor (3) zu gewährleisten, **dadurch gekennzeichnet, dass** das Schaltgerät (1) zum Anschluss eines Erweiterungsmoduls (7) und zur Kommunikation mit diesem vorbereitet ist, wobei in dem Erweiterungsmodul (7) das die Technologiefunktion (TF1, TF2 ... TFn) beinhaltende Softwareobjekt gespeichert ist.

2. Schaltgerät nach Anspruch 1, **dadurch gekennzeichnet, dass** als Mittel (4,6) eine erste und /oder zweite Kommunikationsschnittstelle zum Laden des Softwareobjekts vorgesehen ist.

3. Schaltgerät nach einem der vorangehenden Ansprüche, dadurch **gekennzeichnet, dass** das Schaltgerät (1) zur Kommunikation mit einem Rückwandbus als zweite Kommunikationsschnittstelle (6) versehen ist.

4. Verfahren zur Erweiterung eines Schaltgeräts(1) mit einer Technologiefunktion, wobei die Technologiefunktion (TF1, TF2...TFn) als Softwareobjekt in das Schaltgerät (1) geladen wird und auf einem Mikroprozessor (3) im Schaltgerät(1) abläuft, **dadurch gekennzeichnet, dass** das Softwareobjekt in einem Erweiterungsmodul (7) für das Schaltgerät (1) bereitgestellt wird, das über als zweite Kommunikationsschnittstelle (6) ausgeführte Mittel an das Schaltgerät (1) angeschlossen wird.

5. Verfahren nach Anspruch 4, **dadurch gekennzeichnet, dass** das Softwareobjekt über Mittel (4,6) in das Schaltgerät (1) geladen wird.

6. Verfahren nach Anspruch 4 oder 5, **dadurch gekennzeichnet**, **dass** die Technologiefunktion mittels einer Engineering-Software im Schaltgerät (1) aktiviert und projektiert wird.

7. Verfahren nach einem der Ansprüche 4 bis 6, **dadurch gekennzeichnet**, **dass** das Schaltgerät (1) das Erweiterungsmodul (7) identifiziert und das darin gespeicherte Softwareobjekt in einen Speicher (2) des Schaltgeräts (1) lädt.

## Claims

1. Switching device (1) which has a memory (2) for storing a technology function (TF1,TF2...TFn) as a program and a microprocessor (3) for running said program, wherein means (4,6) are provided with which the switching device (1) can be loaded with a software object containing the technology function (TF1,TF2...TFn) and at least one interface (5) for supporting the software object is provided in order to ensure the running of the software object with the microprocessor (3), **characterised in that** the switching device (1) is prepared for the connection of an expansion module (7) and for communication with said module, wherein the software object containing the technology function (TF1,TF2...TFn) is stored in the expansion module (7).

2. Switching device according to claim 1, **characterised in that** a first and/or second communication interface is provided as means (4,6) for loading the software object.

3. Switching device according to one of the preceding claims, **characterised in that** the switching device (1) is equipped with a backplane bus as second communication interface (6) for communication.

4. Method for expanding a switching device (1) with a technology function, wherein the technology function (TF1,TF2...TFn) is loaded into the switching device (1) as a software object and runs on a microprocessor (3) in the switching device (1), **characterised in that** the software object is provided in an expansion module (7) for the switching device (1), said module being connected to the switching device (1) via means embodied as second communication interface (6).

5. Method according to claim 4, **characterised in that** the software object is loaded into the switching device (1) via means (4,6) .

6. Method according to claim 4 or 5, **characterised in that** the technology function is activated and project-planned by means of engineering software in the switching device (1).

7. Method according to one of claims 4 to 6, **characterised in that** the switching device (1) identifies the expansion module (7) and loads the software object stored therein into a memory (2) of the switching device (1).

## Revendications

1. Appareil ( 1 ) de manoeuvre, qui a une mémoire ( 2 ) de mémorisation d'une fonction ( TF1, TF2... TFn ) de technologie comme programme et un microprocesseur ( 3 ) pour le déroulement de ce programme, dans lequel il est prévu des moyens ( 4, 6 ) par lesquels l'appareil ( 1 ) de manoeuvré peut être chargé d'un objet logiciel contenant la fonction ( TF1, TF2... TFn ) de technologie et en ce qu'il est prévu au moins une interface ( 5 ) pour assister l'objet logiciel, afin d'assurer le déroulement de l'objet logiciel par le microprocesseur ( 3 ), **caractérisé en ce que** l'appareil ( 1 ) de manoeuvré est préparé pour le raccordement d'un module ( 7 ) d'extension et pour la communication avec celui-ci, 1"objet logiciel contenant la fonction ( TF1, TF2... TFn ) de technologie étant mémorisé dans le module ( 7 ) d'extension.

2. Appareil de manoeuvre suivant la revendication 1, **caractérisé en ce qu'**il est prévu comme moyen ( 4, 6 ) une première et/ou une deuxième interface( s ) de communication pour la charge de l'objet logiciel.

3. Appareil de manoeuvre suivant l'une des revendications précédentes, **caractérisé en ce que** l'appareil ( 1 ) de manoeuvre est, pour la communication, pourvu d'un bus de paroi arrière comme deuxième interface ( 6 ) de communication.

4. Procédé d'extension d'un appareil ( 1 ) de manoeuvre ayant une fonction de technologie, la fonction ( TF1, TF2... TFn ) de technologie étant chargée comme objet logiciel dans l'appareil ( 1 ) de manoeuvre et se déroulant sur un microprocesseur ( 3 ) dans l'appareil ( 1 ) de manoeuvre, **caractérisé en ce qu'**on met à disposition de l'appareil ( 1 ) de manoeuvre l'objet logiciel dans un module ( 7 ) d'extension, qui est raccordé à l'appareil ( 1 ) de manoeuvre par des moyens réalisés en deuxième interface ( 6 ) de communication.

5. Procédé suivant la revendication 4, **caractérisé en ce qu'**on charge l'objet logiciel dans l'appareil ( 1 ) de manoeuvre par des moyens ( 4, 6 ).

6. Procédé suivant la revendication 4 ou 5, **caractérisé en ce que** l'on établit et active la fonction de technologie dans l'appareil ( 1 ) de manoeuvre au moyen d'un logiciel d'ingénierie.

7. Procédé suivant l'une des revendications 4 à 6, **caractérisé en ce que** l'appareil ( 1 ) de manoeuvre identifie le module ( 7 ) d'extension et charge l'objet logiciel qui y est mémorisé dans une mémoire ( 2 ) de l'appareil ( 1 ) de manoeuvre.
